(19) **Europäisches Patentamt**
**European Patent Office**
**Office européen des brevets**

(11) **EP 2 056 143 B1**

(12) **EUROPEAN PATENT SPECIFICATION**

(45) Date of publication and mention
of the grant of the patent:
**12.12.2012 Bulletin 2012/50**

(51) Int Cl.:
*G02B 6/42* *(2006.01)*          *G02B 6/122* *(2006.01)*

(21) Application number: **08703382.5**

(22) Date of filing: **17.01.2008**

(86) International application number:
**PCT/JP2008/050527**

(87) International publication number:
**WO 2008/088016 (24.07.2008 Gazette 2008/30)**

(54) **OPTICAL TRANSMISSION MODULE AND ELECTRONIC DEVICE**

MODUL ZUR OPTISCHEN ÜBERTRAGUNG UND ELEKTRONISCHE VORRICHTUNG

MODULE DE TRANSMISSION OPTIQUE ET DISPOSITIF ÉLECTRONIQUE

(84) Designated Contracting States:
**DE FR GB**

(30) Priority: **18.01.2007 JP 2007009573**

(43) Date of publication of application:
**06.05.2009 Bulletin 2009/19**

(73) Proprietor: **OMRON Corporation**
**Shiokoji-dori, Shimogyo-ku**
**Kyoto-shi**
**Kyoto 600-8530 (JP)**

(72) Inventors:
• **OKUNO, Toshiaki**
**c/o Omron Corporation**
**Shimogyo-ku, Kyoto-shi**
**Kyoto 600-8530 (JP)**
• **TANAKA, Junichi**
**c/o Omron Corporation**
**Shimogyo-ku, Kyoto-shi**
**Kyoto 600-8530 (JP)**

• **NOZAWA, Hiroto**
**c/o Omron Corporation**
**Shimogyo-ku, Kyoto-shi**
**Kyoto 600-8530 (JP)**
• **YASUDA, Naru**
**c/o Omron Corporation**
**Shimogyo-ku, Kyoto-shi**
**Kyoto 600-8530 (JP)**
• **HOSOKAWA, Hayami**
**c/o Omron Corporation**
**Shimogyo-ku, Kyoto-shi**
**Kyoto 600-8530 (JP)**

(74) Representative: **Wilhelms · Kilian & Partner**
**Patentanwälte**
**Eduard-Schmid-Straße 2**
**81541 München (DE)**

(56) References cited:
**WO-A1-2006/001434          WO-A1-2006/001447**
**JP-A- 6 308 519          JP-A- 55 043 599**
**US-A1- 2004 036 955          US-A1- 2005 286 831**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

The present invention relates to an optical transmission module for transmitting optical signals, and an electronic device.

BACKGROUND ART

Optical communication networks allowing large-capacity data communication at high speed is expanding in recent years. Such an optical communication network is presumed to be mounted on consumer use devices in the future. An optical data transmission cable (optical cable) of electric input/output that can be used the same way as the current electric cable is being desired for higher and larger capacity data transfer, noise countermeasures, and application of data transmission between substrates in the device. A film optical waveguide is desirably used for such an optical cable in view of flexibility.

The optical waveguide is formed by a core having a large refractive index and a clad having a small refractive index arranged contacting the periphery of the core, and propagates the optical signal entered into the core while repeating total reflection at the boundary of the core and the clad. The film optical waveguide has flexibility since the core and the clad are made of flexible polymer material.

When the film optical waveguide having flexibility is applied to a signal transmission and reception system, it is important to remove a clad propagation light (leak light from the core or external light) that propagates through the clad to ensure transmission characteristics. This is because if stray light propagates to a reception module and enters a light-receiving element, it is added to the signal as noise, thereby degrading the transmission characteristics (Jitter, BER).

In particular, when propagating the signal light at a very weak intensity, and when the stray light has a wavelength received by the light-receiving element, the influence of degradation of the transmission characteristics becomes large. In the optical waveguide in which a plurality of cores is adjacent to each other, other signals may enter the light-receiving element.

As a countermeasure for reducing the stray light propagating through the clad, an optical interconnection disclosed in Patent Document 1, for example, has been known.

The optical interconnection disclosed in Patent Document 1 has a configuration in which a "second or third optical waveguide clad" having a refractive index higher than the clad and being made of an opaque material with respect to the wavelength of the signal light propagating through the core is arranged between the cores adjacent to each other or on a clad surface. In the optical interconnection disclosed in Patent Document 1, the "second or third optical waveguide clad" is arranged over substantially the entire length of the core. Thus, the clad propagation light propagating through the clad is attenuated and the stray light is prevented from being propagated to the adjacent core, and the influence of stray light in the signal transmission and reception system is eliminated.

As a conventional stray light countermeasure, a technique of hiding the clad at the light exit end of the optical waveguide, a technique of arranging an optical separation groove between the cores adjacent to each other, and the like have been known in addition to the stray light countermeasure described in Patent Document 1.

Moreover, a double-clad fiber is known from US 2004/0036955 A1, the fiber being formed such that a pump light from a large-area laser diode is injected into the inner cladding of the fiber via a prism placed on the inner cladding of the fiber in a location where the protective jacked and the outer cladding are removed, as can be gathered from Fig. 3A of this document, for example.

Patent Document 1: Japanese Unexamined Patent Publication No. 11-264912 (date of publication: September 28, 1999)

DISCLOSURE OF THE INVENTION

However, high flexibility is recently demanded on the optical waveguide when applying to the wiring in the electronic device. In a configuration where the "second or third optical waveguide clad" serving as a stray light removing layer is arranged over substantially the entire length of the core as in the prior art described in Patent Document 1, the flexibility of the optical waveguide is inhibited. Furthermore, a problem in that the dimension of the entire optical waveguide increases arises.

Moreover, when manufacturing the optical waveguide, a step of forming a groove between the cores adjacent to each other, and depositing material of the second optical waveguide clad in the groove is required. Thus, an extra step is required, and lower cost of the optical transmission module becomes difficult when manufacturing the optical waveguide.

The present invention has been devised in view of the above problems, and aims to provide an optical transmission module capable of reducing the clad propagation light and ensuring the transmission characteristics at low cost while ensuring the flexibility of the entire optical waveguide, and an electronic device. This object is achieved by an optical transmission module according to claim 1. Advantageous modifications and embodiments of the optical transmission module of claim 1 are subject-matters of the dependent claims.

An optical transmission module according to an aspect of the present invention relates to an optical transmission module including a light-emitting element, a light-receiving element, and an optical path for optically coupling the light-emitting element and the light-receiving element, and transmitting an optical signal; wherein the optical path includes a core part, and a clad part surrounding the core part; and a resin part made of resin having a refractive index higher than air outside the optical path is arranged at a part of a surface area of the clad part along an optical transmission direction to which optical signals are transmitted.

An optical transmission module according to another aspect of the present invention includes a light-emitting element, a light-receiving element, and an optical path for optically coupling the light-emitting element and the light-receiving element, and transmitting a optical signal; wherein the optical path includes a core part, a clad part surrounding the core part, and a support board for supporting the optical path itself and the light-receiving element; a resin part formed of resin having a refractive index higher than air outside the optical path is arranged at a part of a surface area of the clad part along an optical transmission direction to which optical signals are transmitted; the resin part has an inclined surface in which the surface on the opposite side of the clad part is tilted relative to the optical transmission direction; and the inclined surface forms an acute angle with the surface of the clad part at the opposite side of the light-receiving element in the resin part.

According to such a configuration, the clad propagation light propagating through the clad part escapes to the outside of the clad part by entering the resin part, and the clad propagation light can be removed.

Generally, in the optical transmission module, the delay time of the clad propagation light with respect to the signal light tends to increase as the propagation angle of the clad propagation light becomes larger. The delay time that may influence signal delay also has a range. That is, in the optical transmission module, a delay time that can be tolerated (tolerable delay time) is set according to the specification of the signal transmission of the module. The clad propagation light propagated at a propagation angle greater than or equal to the propagation angle (tolerable propagation angle) corresponding to the tolerable delay time is removed to reduce the clad propagation light and ensure the transmission characteristics.

Focusing on such an aspect, in the optical transmission module of yet another aspect of the present invention, a resin part made of resin having a refractive index higher than air outside the optical path is arranged at the part of the surface area of the clad part along the optical transmission direction to which optical signals are transmitted to remove the clad propagation light that influences the signal delay without removing the clad propagation light that does not influence the signal delay.

Therefore, since the resin part is arranged only at the part of the surface area along the optical transmission of the optical path, the flexibility of the entire optical path can be ensured compared to the conventional optical path in which a stray light removing part is formed over the entire surface along the optical transmission direction of the optical path. Furthermore, when forming the optical path, the reduction of the clad propagation light can be achieved in a step of only forming the resin part at the part of the surface area along the optical transmission direction, and thus the cost is low. That is, the clad propagation light can be reduced and the transmission characteristics can be ensured at low cost while ensuring the flexibility of the entire optical path.

Moreover, in the above configuration, the clad propagation light that entered the resin part is reflected at the inclined surface on the opposite side of the clad part, and then exit to a direction close to the optical axis of the signal light. Thus, the clad propagation light again reflected and returned to the clad part side after entering the resin part can be reduced, and the clad propagation light can be efficiently removed.

The optical transmission module according to yet another aspect of the present invention may be configured such that the resin part is arranged on one surface area of the surface areas of two clad parts facing each other in a direction perpendicular to the optical transmission direction, and with respect to a clad propagation light propagating at a propagation angle θ on the side surface along the optical transmission direction of the clad part, a length L in the optical transmission direction of the resin part is set in a range satisfying equation 1 below;

$$\frac{2T}{\tan\theta_{max}} < L < \frac{2T}{\tan\theta_{min}} \quad \text{...Equation 1}$$

where, the propagation angle of the clad propagation light corresponding to a tolerable delay time for tolerating signal delay is a tolerable propagation angle $\theta_{min}$, a critical angle at which the clad propagation light leaks to the outside of the clad part is a critical propagation angle $\theta_{max}$, and a length in a direction perpendicular to the optical transmission direction of the optical path is a thickness T.

The optical transmission module according to yet another aspect of the present invention may be configured such that the resin part is arranged on both surface areas of the surface areas of the two clad parts facing each other in a direction perpendicular to the optical transmission direction; and with respect to a clad propagation light propagating at a propagation angle $\theta$ on the side surface along the optical transmission direction of the clad part, a length L in the optical transmission direction of the resin part is set in a range satisfying equation 2 below;

$$\frac{T}{\tan\theta_{max}} < L < \frac{T}{\tan\theta_{min}} \quad \ldots\text{Equation 2}$$

where, the propagation angle of the clad propagation light corresponding to a tolerable delay time for tolerating the signal delay is a tolerable propagation angle $\theta_{min}$, a critical angle at which the clad propagation light leaks to the outside of the clad part is a critical propagation angle $\theta_{max}$, and a length in a direction perpendicular to the optical transmission direction of the optical path is a thickness T.

Effects are obtained if the length L is set within the range shown in equation 1 or equation 2, where if set to greater than or equal to the maximum value of such a range, the clad propagation light propagating at the propagation angle between the tolerable propagation angle $\theta_{min}$ and the critical propagation angle $\theta_{max}$ always enters the resin part at least once, and the clad propagation light can escape to the outside of the clad part at high efficiency. In other words, while the clad propagation light that does not influence the signal delay is not removed, the clad propagation light that influences the signal delay can be removed.

In the optical transmission module according to yet another aspect of the present invention, it is preferably arranged the near the end on the light-receiving element side in the optical path.

When using the optical transmission module, error occurs in the propagation angle of the clad propagation light at the site where the optical path bends due to such bend. On the other hand, the end on the light-receiving element side in the optical path is the site that is less likely to bend when using the optical transmission module. Thus, the error is less likely to occur in the propagation angle of the clad propagation light near the end on the light-receiving element side. Therefore, the clad propagation light can be reliably removed by setting the length L of the resin part within the range of equation 1 or 2.

The optical transmission module according to yet another aspect of the present invention is preferably so configured that a support board for supporting the optical path and the light-receiving element is arranged and a distance F is set in a range satisfying equation 3 below;

$$F \leq \frac{c \times \cos\theta_{max} \times T_d}{1 - \cos\theta_{max}} \quad \ldots\text{Equation 3}$$

where, the distance from an end of a supporting surface for supporting the optical path at the support board to the resin part is the distance F, a delay time for tolerating the signal delay is a tolerable delay time $T_d$, a velocity of light is c, and a critical angle at which the clad propagation light leaks to the outside of the clad part is a critical propagation angle $\theta_{max}$.

If F is reliably set small to a certain extent at the vicinity of the light-receiving element side by setting the distance F within the range satisfying equation 3, the level that does not influence the delay is obtained even if bend occurs between the resin part and the light-receiving part and the critical propagation angle $\theta_{max}$ component generates. In other words, the clad propagation light that influences the signal delay can be removed without removing the clad propagation light that does not influence the signal delay.

In the optical transmission module according to yet another aspect of the present invention, a light absorbing part for absorbing the clad propagation light entered to the resin part is preferably arranged adjacent on the light-receiving element side of the resin part.

According to such a configuration, the clad propagation light can be reliably removed since the light absorbing part absorbs the clad propagation light entered (escaped) to the resin part from the clad part.

In the optical transmission module according to yet another aspect of the present invention, the resin part is preferably formed to surround an optical axis of the optical path.

Thus, wider area for escaping the clad propagation light is ensured in the resin part, and the clad propagation light propagated from various side surfaces along the optical transmission direction of the clad part is effectively escaped to the outside.

In the optical transmission module according to yet another aspect of the present invention, a configuration may be adopted in which a support board for supporting the optical path and the light-receiving element is arranged, the resin part is formed on a supporting surface for supporting the optical path at the support board; and the support board is made of a light absorbing material capable of absorbing the clad propagation light.

According to such a configuration, when manufacturing the optical transmission module, the resin part can be simultaneously formed in the step of adhering and fixing the optical path to the support board, and thus the reduction of the clad propagation light can be achieved without adding steps.

Furthermore, the number of steps can be reduced by using resin (adhesive) for supporting and fixing the optical path to the support board as a material configuring the resin part.

In the optical transmission module according to yet another aspect of the present invention, preferably, the supporting surface is an uneven surface having a recessed part and a projecting part; and the resin part is formed to fill the recessed part.

Thus, the clad propagation light can be reduced without changing the dimension of the outer shape of the optical transmission module. Furthermore, the area of the contacting surface of the resin part with respect to the support board increases by such an uneven surface, and a wider area can be ensured for the surface for escaping the clad propagation light.

In the optical transmission module according to yet another aspect of the present invention, the resin part may also be arranged near the end on the light-emitting element side in the optical path.

In the optical transmission module, a problem in that the reflected and returned light to the light-emitting element causes the operation of the light-emitting element to become unstable is generally known. According to such a configuration, the reflected and returned light to the light-emitting element can be removed, and waveform distortion and noise of the modulated signal in the light-emitting element is less likely to occur.

In the optical transmission module according to yet another aspect of the present invention, the resin part is preferably made of a material having a refractive index higher than a refractive index of the clad part.

Since the resin part is made of a material having a refractive index higher than the refractive index of the clad part, the clad propagation light is less likely to reenter the clad part after entering the resin part. Thus, the clad propagation light can be more efficiently removed according to the above configuration.

In the optical transmission module according to yet another aspect of the present invention, the resin part is preferably made of a material having a high attenuation rate with respect to the clad propagation light.

The clad propagation light can be more reliably removed by providing the function of absorbing the clad propagation light to the resin part.

An electronic device according to an aspect of the present invention is equipped with the above-described optical transmission module.

According to the above-described configuration, there is provided an electronic device capable of reducing the clad propagation light and ensuring the transmission characteristics at low cost while ensuring the flexibility of the entire optical waveguide.

In the optical transmission module according to another aspect of the present invention, the optical path includes a core part and a clad part surrounding the core part, and a resin part made of resin having a refractive index higher than air outside the optical path is arranged at a part of a surface area of the clad part along an optical transmission direction to which optical signals are transmitted.

The optical transmission module according to yet another aspect of the present invention is an optical transmission module including a light-emitting element, a light-receiving element, and an optical path for optically coupling the light-emitting element and the light-receiving element, and transmitting an optical signal; wherein the optical path includes a core part, a clad part surrounding the core part, and a support board for supporting the optical path itself and the light-receiving element; a resin part made of resin having a refractive index higher than air outside the optical path is arranged at a part of a surface area of the clad part along an optical transmission direction to which optical signals are transmitted; the resin part has an inclined surface in which the surface on the opposite side of the clad part is tilted relative to the optical transmission direction; and the inclined surface forms an acute angle with the surface of the clad part on the opposite side of the light-receiving element in the resin part.

Therefore, since the resin part is arranged only at the part of the surface area along the optical transmission direction of the optical path, the flexibility of the entire optical path can be ensured compared to the conventional optical path in which the stray light removing part is formed over the entire surface along the optical transmission direction of the optical path. Furthermore, when forming the optical path, the reduction of the clad propagation light can be achieved in the step of only forming the resin part at the part of the surface area along the optical transmission direction, and thus the cost is low. That is, the clad propagation light can be reduced and the transmission characteristics can be ensured at low cost while ensuring the flexibility of the entire optical path.

The clad propagation light entered to the resin part is reflected by the inclined surface on the side opposite to the clad part, and thereafter, exit to a direction close to the optical axis of the signal light. Thus, the clad propagation light that is again reflected and returned to the clad part side after entering the resin part can be reduced, and the clad propagation light can be efficiently removed.

The electronic device according to another aspect of the present invention is equipped with the optical transmission module according to the aforementioned aspects of the present invention.

An electronic device of low cost excelling in transmission characteristics while ensuring the flexibility of the entire optical waveguide is provided.

BRIEF DESCRIPTION OF THE DRAWINGS

Fig. 1 is a cross-sectional view of an optical path in an optical transmission module according to one embodiment of the present invention.

Fig. 2 is a view showing a schematic configuration of the optical transmission module according to the present embodiment.

Fig. 3 is a view schematically showing the state of optical transmission of the optical path.

Fig. 4 is a graph showing the relationship between a delay time of a clad propagation light with respect to the signal light propagating through the core part, and a propagation angle of the clad propagation light.

Fig. 5 is an explanatory view for describing the reason for reduction of the clad propagation light in the optical path of Fig. 1.

Fig. 6(a) is an explanatory view for describing the relationship between the refractive index of the resin part and the clad propagation light entering the resin part, and shows a case where a refractive index n1 of the clad part > a refractive index n3 of the resin part.

Fig. 6(b) is an explanatory view for describing the relationship between the refractive index of the resin part and the clad propagation light entering the resin part, and shows a case where the refractive index n1 of the clad part = the refractive index n3 of the resin part.

Fig. 6(c) is an explanatory view for describing the relationship between the refractive index of the resin part and the clad propagation light entering the resin part, and shows a case where the refractive index n1 of the clad part < the refractive index n3 of the resin part.

Fig. 7 is a cross-sectional view showing a configuration of the optical transmission module in which the stray light removing part is arranged near the end on the light-receiving part side in the optical path.

Fig. 8 is a cross-sectional view showing a configuration of the optical transmission module serving as a first variant.

Fig. 9 is a perspective view, a side view, and a cross-sectional view showing a configuration of the optical transmission module serving as a second variant.

Fig. 10 is a cross-sectional view showing a configuration of the optical transmission module serving as a third variant.

Fig. 11 is a cross-sectional view showing a configuration of the optical transmission module serving as a fourth variant.

Fig. 12 is a cross-sectional view showing another configuration example of the optical transmission module serving as the fourth variant.

Fig. 13 is a cross-sectional view showing a configuration of the optical transmission module serving as a fifth variant.

Fig. 14 is a cross-sectional view and a top view showing the configuration of the optical transmission module serving as a sixth variant.

Fig. 15 is a perspective view showing an outer appearance of a foldable mobile telephone including the optical path according to the present embodiment, a block diagram of a portion applied with the optical path, and a perspective plan view of the hinge portion in the foldable mobile telephone.

Fig. 16 is a perspective view showing an outer appearance of a printing device including the optical path according to the present embodiment, a block diagram showing main parts of the printing device, and a perspective view showing a curved state of the optical path when the printer head is moved (driven) in the printing device, and

Fig. 17 is a perspective view showing an outer appearance of a hard disc recording and reproducing device including the optical path according to the present embodiment.

EXPLANATIONS OF SYMBOLS

1 Optical transmission module

| 2 | Light transmission processing unit |
| 3 | Light reception processing unit |
| 4 | Optical path |
| 4C | Optical path conversion mirror surface |
| 5 | Light emission drive part |
| 6 | Light-emitting part |
| 7 | Amplifier |
| 8 | Light-receiving part (light-receiving element) |
| 9 | Support board |
| 9a | Supporting surface |
| 9b | Recessed part |
| 9c | Projecting part |
| 11 | Core part |
| 12 | Clad part |
| 13 | Stray light removing part |
| 13A | Resin part |
| 13A$_1$ | Bottom surface (inclined surface) |
| 13B | Light absorbing part |

BEST MODE FOR CARRYING OUT THE INVENTION

One embodiment of the present invention will be described below based on the drawings.

(Configuration of optical transmission module)

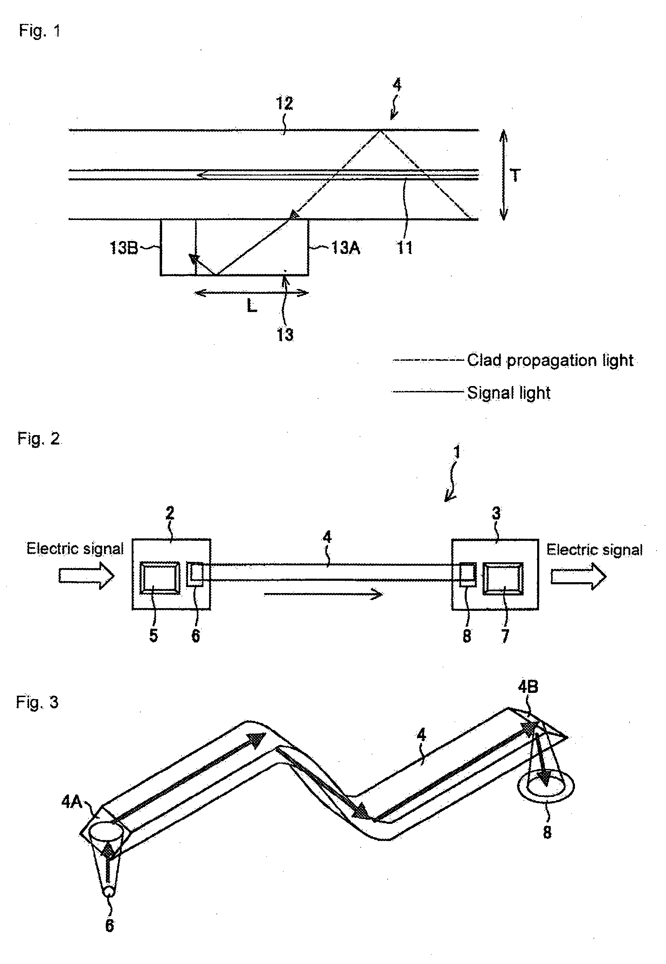

Fig. 2 shows a schematic configuration of an optical transmission module 1 according to the present embodiment. As shown in Fig. 2, the optical transmission module 1 includes a light transmission processing unit 2, a light reception processing unit 3, and an optical path 4.

The light transmission processing unit 2 is configured to include a light emission drive part 5 and a light-emitting part 6. The light emission drive part 5 drives the light emission of the light-emitting part 6 based on an electric signal input from the outside. The light emission drive part 5 is configured by a light emission drive IC (Integrated Circuit), and the like. Although not shown, the light emission drive part 5 is arranged with an electrical connection portion with respect to an electrical wiring for transmitting the electric signal from the outside.

The light-emitting part 6 emits light based on the drive control by the light emission drive part 5. The light-emitting part 6 is configured by a light-emitting element such as VCSEL (Vertical Cavity-Surface Emitting Laser). A light incident side end of the optical path 4 is irradiated with light emitted from the light-emitting part 6 as an optical signal.

The light reception processing unit 3 is configured to include an amplifier 7 and a light-receiving part 8. The light-receiving part 8 receives the light serving as the optical signal emitted from a light exit side end of the optical path 4, and outputs an electric signal by photoelectric conversion. The light-receiving part 8 is configured by a light-emitting element such as PD (Photo-Diode).

The amplifier 7 amplifies the electric signal output from the light-receiving part 8 and outputs the same to the outside. The amplifier 7 is configured by an amplification IC, for example. Although not shown, the amplifier 7 is arranged with an electrical connection part with respect to an electrical wiring for transmitting the electric signal to the outside.

The optical path 4 is a medium for transmitting the light exit from the light-emitting part 6 to the light-receiving part 8. The details of the configuration of the optical path 4 will be hereinafter described.

Fig. 3 schematically shows the state of optical transmission of the optical path 4. As shown in Fig. 3, the optical path 4 is configured by a columnar member having flexibility. A light incident surface 4A is formed on the light incident side end of the optical path 4, and a light exit surface 4B is formed on the light exit side end.

The light exit from the light-emitting part 6 enters the light incident side end of the optical path 4 from a direction perpendicular to the optical transmission direction of the optical path 4. The incident light advances through the optical path 4 by being reflected at the light incident surface 4A. The light advanced through the optical path 4 and reached to the light exit side end is reflected at the light exit surface 4B, and exits in a direction perpendicular to the optical transmission direction of the optical path 4. The light-receiving part 8 is irradiated with the exited light, and the exited light is subjected to photoelectric conversion in the light-receiving part 8.

According to such a configuration, with respect to the optical path 4, the light-emitting part 6 serving as a light source may be arranged in a transverse direction with respect to the optical transmission direction. Therefore, if the optical path 4 needs to be arranged parallel to a substrate surface, the light-emitting part 6 may be installed between the optical path 4 and the substrate surface so as to exit the light in a normal direction of the substrate surface. Such a configuration facilitates mounting, and the configuration is more miniaturized compared to the configuration of installing the light-emitting part 6 so as to exit the light parallel to the substrate surface. This is because the general configuration of the light-emitting part 6 is larger in size in the direction perpendicular to the direction of exiting the light than the size in the direction of exiting the light. Furthermore, the optical path 4 is also applicable to a configuration using a planar mounting light-emitting element in which an electrode and the light-emitting part exist in the same plane.

The optical transmission module 1 of the present embodiment has a configuration of guiding the signal light propagated through the optical path 4 to the light-receiving part 8 by reflecting at the light exit surface 4B (i.e., configuration using the light exit surface 4B as a reflecting surface for converting the optical path), but the configuration of the optical transmission module 1 is not limited to such a configuration, and the signal light exit from the light exit surface 4B merely needs to be receivable by the light-receiving part 8. For instance, the optical path 4 may have a configuration in which the signal light exits from the light exit surface 4B in the optical transmission direction without the light exit surface 4B functioning as the reflecting surface. In this case, the light-receiving part 8 is arranged so that the light receiving surface is in a direction perpendicular to the substrate surface (i.e., direction perpendicular to the optical transmission direction), and receives the signal light exited in the optical transmission direction from the light exit surface 4B.

(Configuration of optical path)

Fig. 1 shows a cross-sectional view of the optical path 4. As shown in Fig. 1, the optical path 4 has a configuration including two columnar core parts (11) having the optical transmission direction as an axis, and a clad part 12 arranged so as to surround the periphery of the core part 11. The core part 11 and the clad part 12 are formed of a material having translucency, and the refractive index of the core part 11 is higher than the refractive index of the clad part 12. The optical signal entered to the respective core part 11 is transmitted in the optical transmission direction by repeating total reflection at the interior of the core part 11.

The material configuring the core part 11 and the clad part 12 may be glass, plastic, or the like, but is preferably a flexible material having elasticity of smaller than or equal to 1000 MPa to form the optical path 4 having sufficient flexibility. The material configuring the optical path 4 includes resin material of acrylic, epoxy, urethane, and silicone. The clad part 12 may be formed of gas such as air. Furthermore, similar effect is also obtained when the clad part 12 is used under an atmosphere of liquid having a refractive index smaller than the core part 11.

As shown in Fig. 1, the optical transmission module 1 has a stray light removing part 13 arranged on part of a surface area along the optical transmission direction. The stray light removing part 13 includes a resin part 13A formed of resin having a refractive index higher than air outside the optical path 4, and a light absorbing part 13B formed adjacent to the light-receiving part 8 side of the resin part 13A.

According to such, an unclaimed configuration, the clad propagation light propagating through the clad part 12 enters the resin part 13A to escape to the outside of the clad part 12. The clad propagation light entered to the resin part 13A is absorbed (reflected) at the surface of the light absorbing part 13B, so that the clad propagation light is removed in the stray light removing part 13.

Thus, since the stray light removing part 13 is arranged only on part of the surface area along the optical transmission direction of the optical path 4, the flexibility of the entire optical path 4 can be ensured compared to the conventional optical path in which the stray light removing part is formed over the entire surface along the optical transmission direction of the optical path. Furthermore, cost can be reduced as the reduction of the clad propagation light is realized with the step of merely forming the stray light removing part on the part of the surface area along the optical transmission direction when manufacturing the optical path 4.

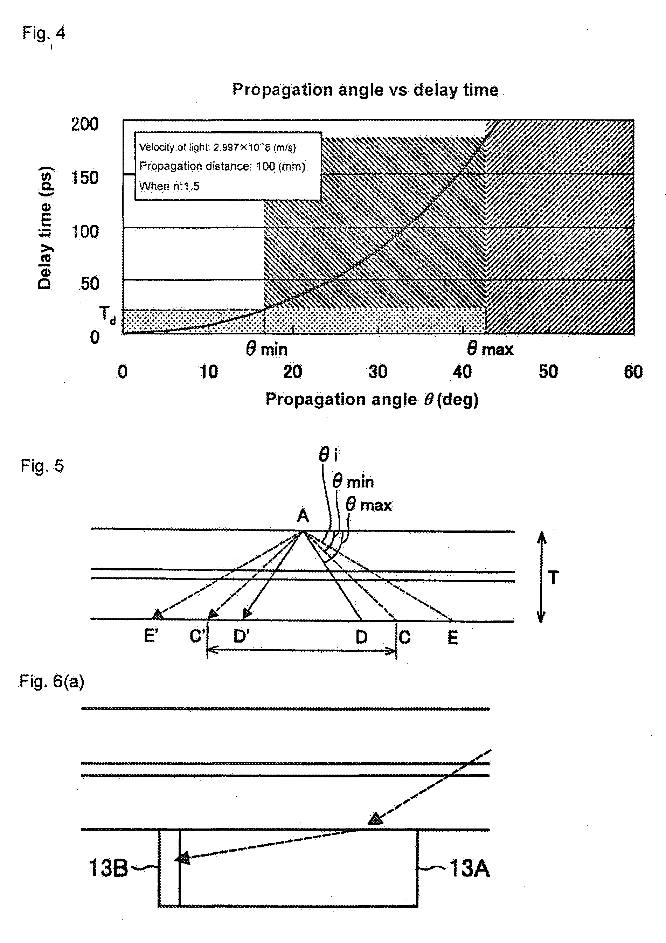

The reason the signal delay caused by the clad propagation light (clad mode) can be reduced and the transmission characteristics can be ensured even with the configuration of arranging the stray light removing part only on part of the surface area along the optical transmission direction of the optical path 4 will be described based on Figs. 4 and 5. Fig. 4 is a graph showing the relationship between a delay time T of the clad propagation light with respect to the signal light propagating through the core part 11, and a propagation angle $\theta$ of the clad propagation light. Fig. 5 is an explanatory view for describing the reason for reduction of the clad propagation light in the optical path 4. The "propagation angle $\theta$ of the clad propagation light" refers to an angle formed by the optical axis of the clad propagation light and the side surface of the clad part 12 along the optical transmission direction.

As shown in Fig. 4, the delay time of the clad propagation light with respect to the signal light tends to become large as the propagation angle of the clad propagation light becomes large. This is because when the propagation angle of the clad propagation light become small, the propagation speed and the substantial propagation distance approaches those of the signal light, and the difference (delay time) between the propagation speed of the clad propagation light and the propagation speed of the signal light becomes small.

As shown in Fig. 4, the delay time that may influence as signal delay also has a range in the optical transmission module 1. That is, in the optical transmission module 1, the tolerable delay time is set according to the specification of the signal transmission of the module. For instance, considering the signal transmission at 1.25Gbps, the clad propagation light component propagated at the delay time (e.g., to several dozen ps) of the level that does not influence the specification value (e.g., max 100ps) of the jitter does not influence the signal delay.

Assume the tolerable delay time is $T_d$. In the relationship between the delay time T and the propagation angle $\theta$, the propagation angle corresponding to the tolerable delay time $T_d$ is tolerable propagation angle $\theta_{min}$. As shown in Fig. 4, the delay time $T_i$ corresponding to the propagation angle $\theta_i$ smaller than the tolerable propagation angle $\theta_{min}$ is smaller than the tolerable delay time $T_d$. That is, the clad propagation light propagated at the propagation angle $\theta_i$ smaller than the tolerable propagation angle $\theta_{min}$ does not influence the signal delay.

The clad propagation light also has a critical angle at which the clad propagation light leaks to the air outside the clad part 12 when propagated at the relevant propagation angle or larger. The critical angle is critical propagation angle $\theta_{max}$. The delay time corresponding to the critical propagation angle $\theta_{max}$ is the maximum delay time $T_{max}$. In the optical transmission module 1, the clad propagation light propagated at the propagation angle greater than the critical propagation angle $\theta_{max}$ leaks to the outside and does not influence the signal delay. The critical propagation angle $\theta_{max}$ (i.e., critical angle of clad propagation light) is the angle determined by the refractive index n of the clad part 12, where the critical propagation angle $\theta_{max}$ = arccos (1/n) = 48.2(deg) when n = 1.5.

Therefore, taking the signal delay in the optical transmission module 1 into consideration, the angular component of the clad propagation light between the tolerable delay time $T_d$ and the maximum delay time $T_{max}$, that is, the clad propagation light propagated at the propagation angle between the tolerable propagation angle $\theta_{min}$ and the critical propagation angle $\theta_{max}$ influences the transmission characteristics as noise. Such clad propagation light is removed in the optical transmission module 1.

As shown in Fig. 5, the clad propagation light propagated (reflected) at one point A, which is the side surface of the clad part 12, is reviewed. First, the clad propagation light propagated at the tolerable propagation angle $\theta_{min}$ is reflected at point C on the opposing side surface (of point A), and reflected at point A, thereby reaching point C'. Similarly, the clad propagation light propagated at the critical propagation angle $\theta_{max}$ is reflected at point D thereby reaching point D'. The clad propagation light propagated at the propagation angle $\theta_i$ smaller than the tolerable propagation angle $\theta_{min}$ is reflected at point E thereby reaching point E'.

Here, in the optical transmission module 1, when the stray light removing part 13 is arranged on the side surface facing point A, the clad propagation light reaching points C/C' or points D/D' is removed. The clad propagation light reaching point E and point E' (i.e., clad propagation light propagated at the propagation angle $\theta_i$ smaller than the tolerable propagation angle $\theta_{min}$) is the clad propagation light that does not influence the signal delay, and thus does not need to be removed.

The optical path 4 in the optical transmission module 1 includes the stray light removing part 13 at the part of the surface area of the clad part 12 to remove the clad propagation light that influences the signal delay without removing the clad propagation light that does not influence the signal delay. The flexibility of the entire optical path 4 is thereby enhanced.

In the conventional optical transmission module, the stray light removing part is formed on the entire surface along the optical transmission direction of the optical path. Thus, even the clad propagation light that does not influence the signal delay is removed, and the flexibility of the entire optical path cannot be ensured.

That is, the optical path 4 efficiently satisfies both the removal of the clad propagation light and the flexibility of the entire optical path.

If the resin part 13A of the stray light removing part 13 is arranged on one surface area of the surface areas of the two clad parts 12 facing each other in a direction perpendicular to the optical transmission direction (i.e., when the stray light removing part 13 is formed only on the side surface facing point A), the length L of the resin part 13A in the optical transmission direction is set in a range satisfying equation 1:

$$\frac{2T}{\tan\theta_{max}} < L < \frac{2T}{\tan\theta_{min}} \quad \text{...Equation 1.}$$

If the resin part 13A of the stray light removing part 13 is arranged on both surface areas of the two clad parts 12 facing each other in the direction perpendicular to the optical transmission direction (i.e., when the stray light removing part 13 is formed on both the side surface including point A and the side surface facing thereto), the length L of the resin part 13A in the optical transmission direction is set in a range satisfying equation 2:

$$\frac{T}{\tan\theta_{max}} < L < \frac{T}{\tan\theta_{min}} \qquad \text{...Equation 2.}$$

In equations 1 and 2 above, with respect to the clad propagation light propagated at the propagation angle $\theta$ on the side surface along the optical transmission direction of the clad part 12, the propagation angle of the clad propagation light corresponding to the tolerable delay time that can tolerate the signal delay is the tolerable propagation angle $\theta_{min}$, the critical angle at which the clad propagation light leaks to the outside of the clad part is the critical propagation angle $\theta_{max}$, and the length in the direction perpendicular to the optical transmission direction of the optical path is the thickness T.

The clad propagation light propagated at the propagation angle between the tolerable propagation angle $\theta_{min}$ and the critical propagation angle $\theta_{max}$ always enters the resin part 13A at least once, and thus the clad propagation light can escape to the outside of the clad part 12 at high efficiency by setting the length L to greater than or equal to a maximum value in the range shown in equation 1 or equation 2. In other words, the clad propagation light that influences the signal delay can be removed. For instance, if the critical propagation angle $\theta_{max}$ = 42 (deg), the tolerable propagation angle $\theta_{min}$ = 16 (deg), and the thickness T = 200 ($\mu$m), the range of the length L (mm) is as follows.

If the resin part 13A is formed on one surface area of the clad part 12,

$$0.36 < L < 1.31$$

If the resin part 13A is formed on both surface areas of the clad part 12,

$$0.18 < L < 0.65$$

In the stray light removing part 13, the material configuring the resin part 13A is not particularly limited as long as it is a material having a refractive index higher than air. In particular, if the resin part 13A is made of a material having a refractive index higher than the clad part 12, the clad propagation light is less likely to reenter the clad part 12 after entering the resin part 13A, and thus the clad propagation light can be more efficiently removed. More specifically, the material configuring the resin part 13A may be silicone resin, epoxy resin, or the like. The material configuring the resin part 13A is preferably a material in which the Young's modulus of the hardened material thereof is smaller than or equal to the Young's modulus of the optical path 4.

Furthermore, the resin part 13A is preferably formed of a material having a high attenuation rate with respect to the incident clad propagation light. That is, resin capable of absorbing the clad propagation light can be used for the material configuring the resin part 13A. The resin capable of absorbing the clad propagation light includes resin non-transparent to the clad propagation light.

In the optical transmission module 1, the clad propagation light can be reduced even if the refractive index of the resin part 13A is the same as the refractive index of the clad part 12 or is lower than the refractive index of the clad part 12. The relationship between the refractive index of the resin part 13A and the clad propagation light entering the resin part 13A will be described below.

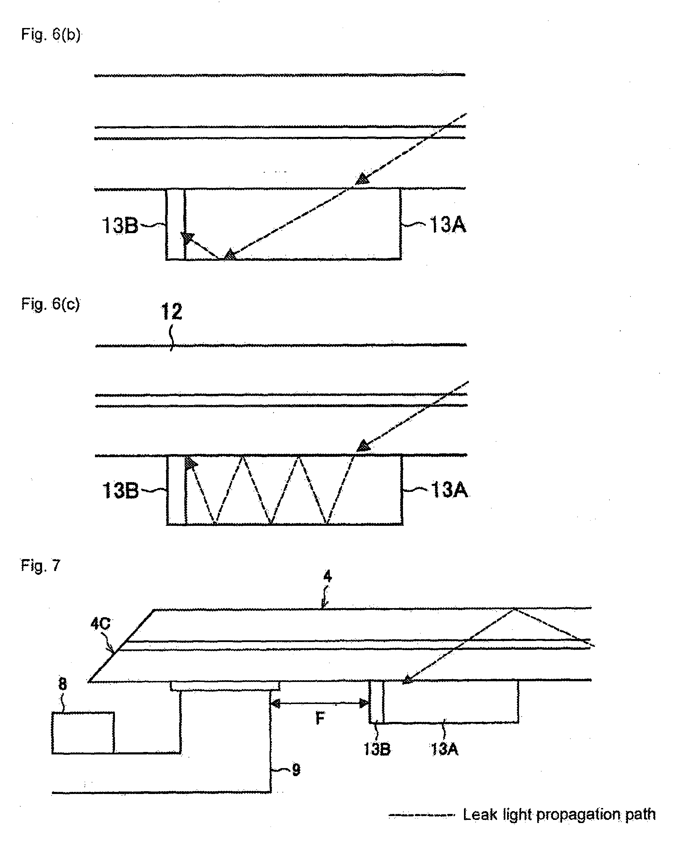

Fig. 6(a) is an explanatory view for describing the relationship between the refractive index of the resin part 13A and the clad propagation light entering the resin part 13A, and shows a case where the refractive index n1 of the clad part 12 > the refractive index n3 of the resin part 13A. Fig. 6(b) is an explanatory view for describing the relationship between the refractive index of the resin part 13A and the clad propagation light entering the resin part 13A, and shows a case where the refractive index n1 of the clad part 12 = the refractive index n3 of the resin part 13A. Fig. 6(c) is an explanatory view for describing the relationship between the refractive index of the resin part 13A and the clad propagation light entering the resin part 13A, and shows a case where the refractive index n1 of the clad part 12 < the refractive index n3 of the resin part 13A. Here, the refractive index of air is n2.

In the case of refractive index n1 of the clad part 12 > refractive index n3 of the resin part 13A, the refraction angle $\phi$ of the clad propagation light with respect to the resin part 13A becomes smaller than the propagation angle $\theta$ of the clad propagation light, as shown in Fig. 6(a). Thus, the clad propagation light entered to the resin part 13A is collected and attenuated by the light absorbing part 14B.

In the case of refractive index n1 of the clad part 12 = refractive index n3 of the resin part 13A, the refraction angle φ of the clad propagation light with respect to the resin part 13A becomes the same as the propagation angle θ of the clad propagation light, as shown in Fig. 6(b). Thus, the clad propagation light entered to the resin part 13A is reflected at the bottom surface of the resin part 13A, and then entered to the light absorbing part 14B and attenuated without changing the incident angle. In this case, the clad propagation light can be removed by the area of the contacting surface the light absorbing part 14B contacts the resin part 13A.

In the case of refractive index n1 of the clad part 12 < refractive index n3 of the resin part 13A, the refraction angle φ of the clad propagation light with respect to the resin part 13A becomes larger than the propagation angle θ of the clad propagation light, as shown in Fig. 6(c). Thus, the clad propagation light entered to the resin part 13A is less likely to again return to the clad part 12 after being reflected at the bottom surface of the resin part 13A. In other words, the clad propagation light is repeatedly reflected between the bottom surface of the resin part 13A and the contacting surface (upper surface) with the clad part 12, and attenuated by the light absorbing part 13B.

Therefore, in the optical transmission module 1, the clad propagation light can be removed as long as the material configuring the resin part 13A is a material having a refractive index higher than air.

The stray light removing part 13 is preferably arranged near the end on the light-receiving part 8 side in the optical path 4. When using the optical transmission module 1, an error occurs in the propagation angle of the clad propagation light at the site where the optical path 4 bends due to such bend. The end on the light-receiving part 8 side in the optical path 4 is a site that is less likely to bend when using the optical transmission module 1. Thus, an error is less likely to occur in the propagation angle of the clad propagation light near the end on the light-receiving part 8 side. The clad propagation light can be reliably removed by setting the length L of the resin part 13A within the range of equation 1 or 2.

The stray light removing part 13 may also be formed near the end on the light-emitting part 6 side. In the optical transmission module 1, a problem in that the light reflected and returned to the light-emitting part 6 causes the operation of the light-emitting part 6 to become unstable is generally known.

Problems similar to the above also arise when the light-emitting part 6 is configured by a VCSEL light-emitting element. Specifically, the VCSEL amplifies the light with a predetermined resonator length. When the reflected and returned light enters the VCSEL, the reflected and returned light interferes with the light resonating in the VCSEL. Thus, the reflected and returned light becomes the cause of waveform distortion and noise of the modulated signal in the VCSEL. If the stray light removing part 13 is formed near the end on the light-emitting part 6 side, such reflected and returned light can be removed, and waveform distortion and noise of the modulated signal are less likely to occur.

(Configuration in which stray light removing part 13 is arranged near the end on the light-receiving part 8 side in the optical path 4)

The configuration in which the stray light removing part 13 is arranged near the end on the light-receiving part 8 side in the optical path 4 will be described in detail below. Fig. 7 is a cross-sectional view showing a configuration of the optical transmission module 1 in which the stray light removing part 13 is arranged near the end on the light-receiving part 8 side in the optical path 4.

As shown in Fig. 7, the optical transmission module 1 is configured including the optical path 4 with a support board 9, the light-receiving part (light-receiving element) 8, and the stray light removing part 13 near the end. The end of the optical path 4 is fixed to the support board 9 by adhesive, and the like, so that the relative positional relationship between the end of the optical path 4 and the light-receiving part 8 is a fixed state. The optical transmission module 1 may include an electrical wiring or an electrical connection part to facilitate the retrieval of the electric signal output by the light-receiving part 8. The light-receiving part 8 is configured by a light-receiving element such as photodiode.

In Fig. 7, at the vicinity of the end of the optical path 4, the longitudinal direction (optical axis direction) of the optical path 4 is the X-axis direction, and the normal direction of the mounting surface of the light-receiving part 8 at the support board 9 is the Y-axis direction.

The end face in the optical path 4 is not perpendicular to the optical axis (X-axis), and is cut diagonally to form an optical path conversion mirror surface 4C. Specifically, the end face of the optical path 4 is perpendicular to the XY plane, and is tilted relative to the X-axis so as to form an angle θ (θ < 90°).

Thus, at the exit side of the light in the optical path 4, the signal light transmitted through the core part 11 is reflected by the optical path conversion mirror surface 4C, and exit from the optical path conversion mirror surface 4C towards the light-receiving part 8 with the advancing direction changed. Since the light exit surface in the optical path 4 is the optical path conversion mirror surface 4C, the light receiving surface of the light-receiving part 8 is arranged to face the light exit surface (optical path conversion mirror surface 4C) of the optical path 4.

The inclination angle θ of the optical path conversion mirror surface 4C is normally set to 45° so that alignment of the optical path conversion mirror surface 4C and the light-receiving part 8 is facilitated. However, in the present invention, the inclination angle θ of the optical path conversion mirror surface 4C is not limited to 45°. Specifically, the inclination angle θ of the optical path conversion mirror surface 4C is preferably set in a range of between 35° and 50°.

The optical path conversion mirror surface may be a mirror part external to the end of the optical path 4.

In the optical transmission module 1 shown in Fig. 7, the stray light removing part 13 including the resin part 13A and the light absorbing part 13B is formed near the light-receiving part 8 in the optical path 4. The stray light removing part 13 is formed on the surface area of the clad part 12 spaced apart by a distance F from the end of a supporting surface 9a for supporting the optical path 4 at the support board 9.

The design of the distance F will be described below. The distance F is set in a range satisfying, equation 3:

$$F \leq \frac{c \times \cos\theta_{max} \times T_d}{1 - \cos\theta_{max}} \quad \text{...Equation 3}$$

Taking into consideration that even if bend occurs between the stray light removing part 13 and the light-receiving part 8, the distance F is set to a level delay does not occur.

In equation 3, the delay time that tolerates the signal delay is the tolerable delay time $T_d$, the velocity of light is c, and the critical angle at which the clad propagation light leaks to the outside of the clad part is the critical propagation angle $\theta_{max}$.

If F is reliably set small to a certain extent at the vicinity of the light-receiving part 8 by setting the distance F in a range satisfying equation 3, a level that does not influence the delay is obtained even if bend occurs between the resin part and the light-receiving part and the critical propagation angle $\theta_{max}$ component generates. For instance, if the tolerable delay time $T_d$ = 20(ps), the velocity of light c = 3.0 × 10⁸(m/s), and the critical propagation angle $\theta_{max}$ = 42 (deg), the distance F is set in a range of F ≤ 17.3 (mm).

All the configurations of the optical path described above are reference modes of the present invention. In other words, the configurations of the optical path described above that are not essential in the optical transmission module 1 according to the present invention described below are all similarly applicable to the optical transmission module 1 according to the present invention.

(First variant)

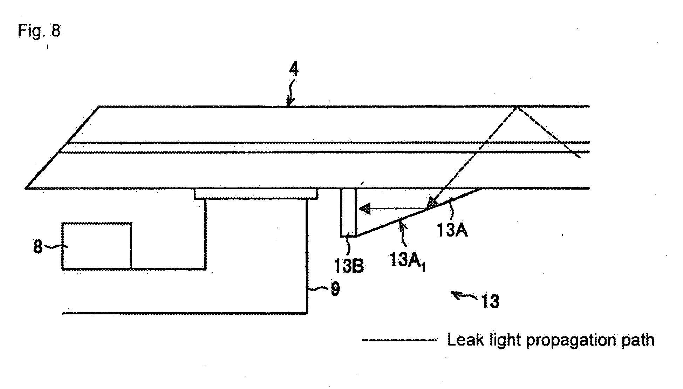

A variant of the configuration shown in Fig. 7 will be described in the configuration of the optical transmission module 1 of the present embodiment. Fig. 8 is a cross-sectional view of the optical transmission module according to the present invention, the optical transmission module 1 serving as the first variant. In the configuration shown in Fig. 7, the bottom surface of the stray light removing part 13 (surface on the opposite side of the clad part 12 of the stray light removing part 13) is a surface parallel to the optical transmission direction, but a configuration in which the bottom surface of the stray light removing part 13 is tilted relative to the optical transmission direction is adopted in the configuration shown in Fig. 8. In the example shown in Fig. 8, the bottom surface $13A_1$ of the resin part 13 is tilted so as to decline with respect to the optical transmission direction. Conversely, the bottom surface $13A_1$ forms an acute angle with the surface of the clad part 12 on the opposite side of the light-receiving part 8 with the light absorbing part 13B in between.

The clad propagation light entered to the resin part 13A is reflected by the bottom surface $13A_1$, and then exit in a direction close to the optical axis of the signal light as the bottom surface 13A of the resin part 13A is tilted. Thus, the clad propagation light that is again reflected and returned to the clad part 12 side after entering the resin part 13A can be reduced, and the clad propagation light can be efficiently collected to the light absorbing part 13B.

The optical transmission module 1 serving as the first variant shown in Fig. 8 is also formed such that the light-receiving part 8 side in the resin part 13A forms an acute angle with the surface of the clad part 12, in addition to the opposite side of the light-receiving part 8 in the resin part 13A, but it is not limited thereto. In other words, the light-receiving part 8 side in the resin part 13A may be formed to form an acute angle with the surface of the clad part 12 in the optical transmission module 1 serving as the first variant shown in Fig. 8. Furthermore, in the optical transmission module 1 serving as the first variant shown in Fig. 8, the bottom surface does not necessarily need to be tilted relative to the surface of the clad part 12 on the light-receiving part 8 side in the resin part 13A, and may be formed parallel to the surface of the clad part 12.

In other words, in the optical transmission module according to the present invention, the resin part includes an inclined surface in which the surface on the opposite side of the clad part is tilted relative to the optical transmission direction, which inclined surface can be interpreted as having a configuration of forming an acute angle with the surface of the clad part on the opposite side of the light-receiving element in the resin part.

(Second variant)

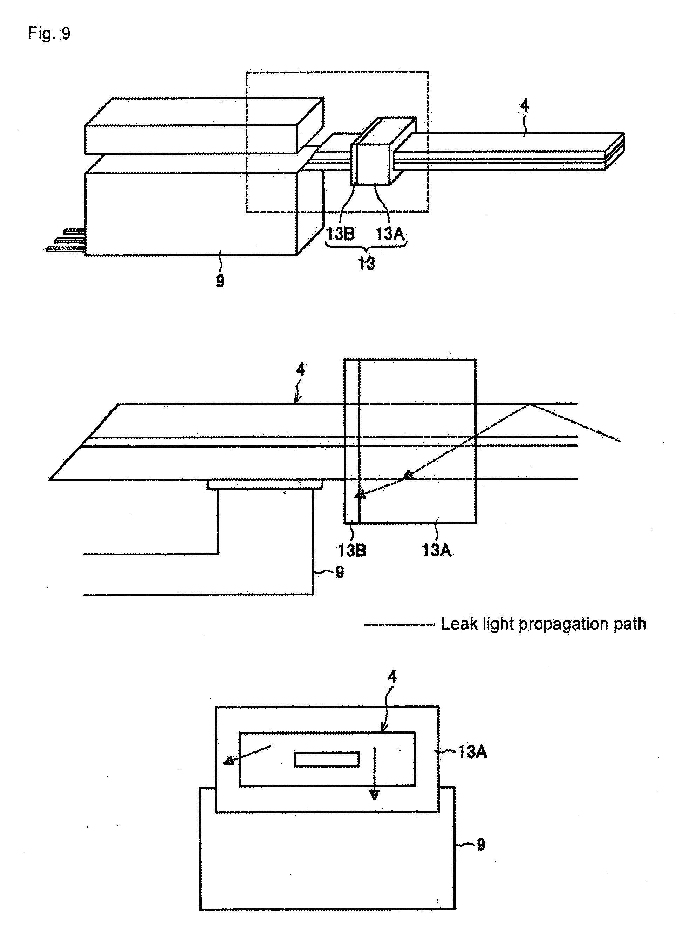

An and claimed variant of the configuration shown in Fig. 7 will be described in the configuration of the optical transmission module 1 of the present embodiment. Fig. 9 shows a perspective view and a side view of the optical transmission module 1 serving as the second variant, and a cross-sectional view taken along a plane perpendicular to the optical transmission direction. In the configuration shown in Fig. 7, the stray light removing part 13 is formed at part of the surface area of the clad part 12 about the optical axis of the optical path 4, but the stray light removing part 13 may be formed to surround the optical axis of the optical path 4, as shown in Fig. 9. In other words, the optical path 4 may pass through the stray light removing part 13.

Thus, a wider area for escaping and absorbing the clad propagation light can be ensured in the stray light removing part 13, and the clad propagation light propagated from various side surfaces along the optical transmission direction of the clad part 12 can be effectively absorbed.

(Third variant)

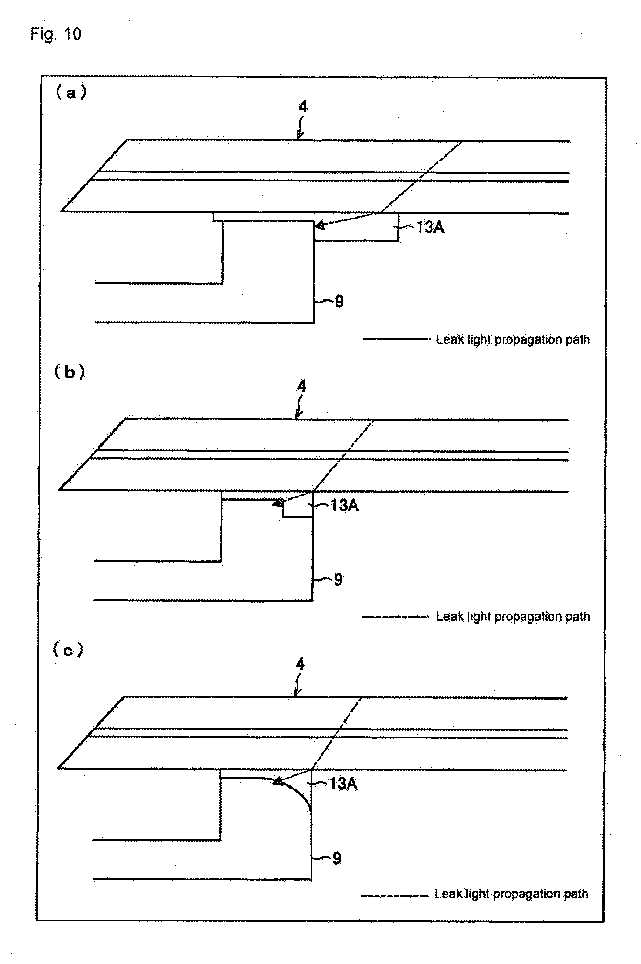

Another and claimed variant of the configuration shown in Fig. 7 will be described in the configuration of the optical transmission module 1 of the present embodiment. Fig. 10 is a cross-sectional view showing the configuration of the optical transmission module according to the present invention, the optical transmission module 1 serving as the third variant. In the configuration shown in Fig. 7, the stray light removing part 13 is formed on the surface area spaced apart by the distance F from the end of the supporting surface 9a for supporting the optical path 4 at the support board 9, but the resin part 13A may be formed at the supporting surface 9a for supporting the optical path 4 at the support board 9, as shown in Fig. 10. In this case, the support board 9 itself functions as the light absorbing part 13B, and is formed of a light absorbing material capable of absorbing the clad propagation light. In other words, the configuration shown in Fig. 10 can be considered as the configuration satisfying F=0 of the distance F set within the range of the equation 3.

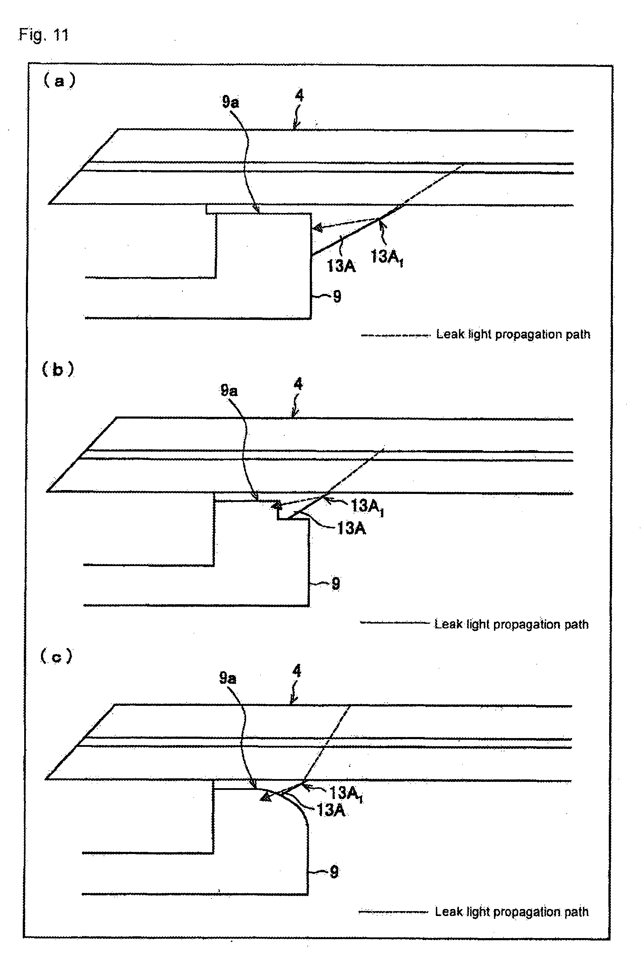

The configuration of the optical transmission module according to the present invention shown in Figs. 11 to 14 to be hereinafter described above can be considered as the configuration satisfying F = 0 of the distance F set within the range of equation 3, similar to the configuration shown in Fig. 10.

In the configuration shown in Fig. 10, resin (adhesive) for supporting and fixing the optical path 4 at the support board 9 can be used for the material configuring the resin part 13A. Thus, in manufacturing the optical transmission module 1, the stray light removing part 13 can be simultaneously formed in the step of adhering and fixing the optical path 4 to the support board 9, whereby the clad propagation light can be reduced without adding steps.

The optical transmission module 1 of the third variant includes a configuration in which the supporting surface 9a for supporting the optical path 4 is a step surface having steps in the Y direction, as shown in (b) of Fig. 10, where the resin part 13A is filled into the gap formed by such step and the clad part 12. As shown in (c) of Fig. 10, the light-emitting part 6 side (opposite side of light-receiving part 8 side) of the supporting surface 9a for supporting the optical path 4 may be a curved surface (R surface). The resin part 13A is similarly filled into the gap between the curved surface (R surface) and the clad part 12.

(Fourth variant)

Another claimed variant of the configuration shown in Fig. 7 will now be described in the configuration of the optical transmission module 1 of the present embodiment. Fig. 11 is a cross-sectional view showing a configuration of the optical transmission module 1 serving as the fourth variant. The configuration shown in Fig. 11 is a configuration in which the resin part 13A is formed on the supporting surface 9a for supporting the optical transmission path 4 at the support board 9, similar to the configuration of Fig. 10. However, the bottom surface 13A of the resin part 13 differs from the configuration of Fig. 10 in being tilted so as to decline with respect to the optical transmission direction.

The clad propagation light that is again reflected and returned to the clad part 12 side after entering the resin part 13A can be reduced, and the clad propagation light can be efficiently collected to the support board 9 serving as the light absorbing part 13B.

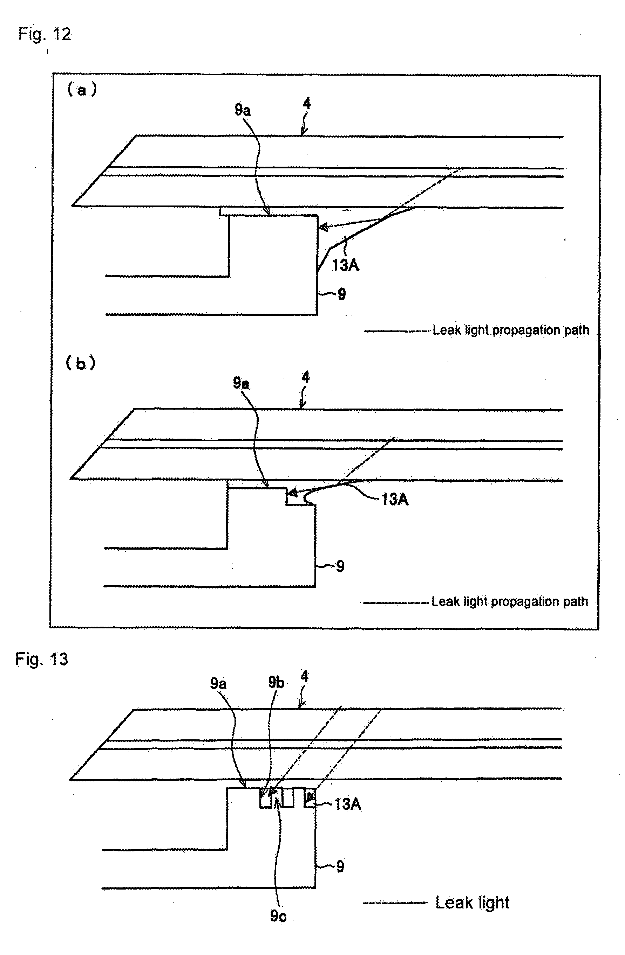

Similar effects are obtained by adopting the configuration in which the resin part 13A is formed to a fillet shape between the optical path 4 and the supporting surface 9a, as shown in Fig. 12, for the configuration of the optical transmission module 1 of the fourth variant.

(Fifth variant)

Another claimed variant of the configuration shown in Fig. 7 will be described in the configuration of the optical transmission module 1 of the present embodiment. Fig. 13 is a cross-sectional view showing a configuration of the optical transmission module 1 serving as the fifth variant. Similar to the configuration of Fig. 10, the configuration shown in Fig. 13 is a configuration in which the resin part 13A is formed on the supporting surface 9a for supporting the optical path 4 at the support board 9. However, the configuration differs from the configuration of Fig. 10 in that the supporting surface 9a is an uneven surface including a recessed part 9b and a projecting part 9c. As shown in Fig. 13, the resin part 13A is formed by being filled into a gap formed by the recessed part 9b. According to such configuration, the clad propagation light can be reduced without changing the dimension of the outer shape of the optical transmission module 1. Furthermore, the area of the contacting surface of the resin part 13A with respect to the support board 9 increases by such uneven surface and a wider area can be ensured for the surface for absorbing the clad propagation light.

(Sixth variant)

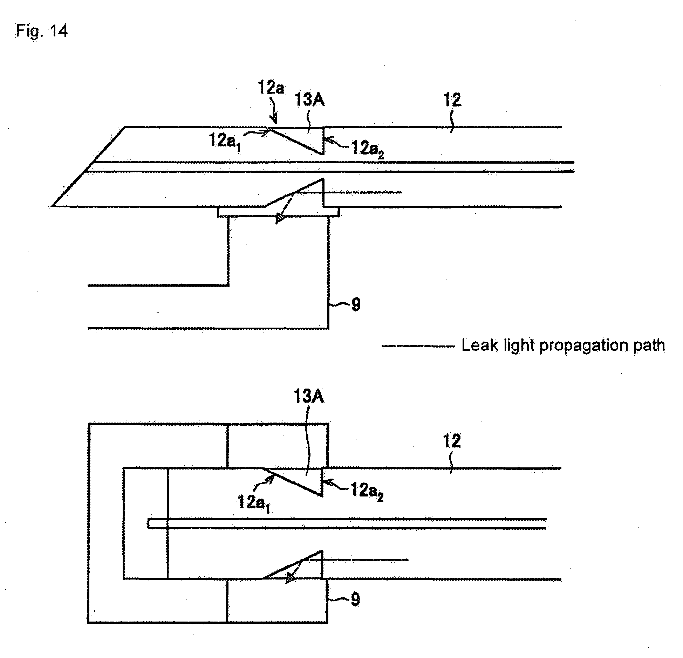

Another and claimed variant of the configuration shown in Fig. 7 will be described in the configuration of the optical transmission module 1 of the present embodiment. Fig. 14 is a cross-sectional view and a top view showing the configuration of the optical transmission module 1 serving as the sixth variant. Similar to the configuration of Fig. 10, the configuration shown in Fig. 14 is a configuration in which the resin part 13A is formed on the supporting surface 9a for supporting the optical path 4 at the support board 9. However, the configuration differs from the configuration of Fig. 10 in that a cutout 12a is formed in the core part 11 so as not to extend to the core part 11 in the optical path 4. As shown in the figure, the cutout 12a is formed to surround the periphery of the optical axis of the optical path 4, and the resin part 13A is formed to fill the cutout 12a. A light absorbing material capable of absorbing the clad propagation light is used for the material of the resin part 13A. Specifically, a material having higher refractive index than the clad part 12 and having high attenuation rate with respect to the clad propagation light is used.

As shown in the figure, the cutout 12a is formed by an inclined surface $12a_1$ tilted relative to the optical transmission direction and a vertical surface $12a_2$ perpendicular to the optical transmission direction. The inclined surface $12a_1$ is an inclined surface tilted such that the cutout depth of the cutout 12a (width of the vertical surface $12a_2$ in the perpendicular direction with respect to the optical transmission direction) becomes larger towards the opposite direction of the optical transmission direction. Since the inclined surface $12a_2$ is formed in such manner, when the clad propagation light propagated at the propagation angle than the tolerable propagation angle $\theta_{min}$ enters the resin part 13A, the clad propagation light is reflected by the inclined surface $12a_1$ and entered to the support board 9 serving as the light absorbing part 13B. That is, according to the configuration shown in Fig. 14, even the clad propagation light that does not influence the signal delay propagated at the propagation angle smaller than the tolerable propagation angle $\theta_{min}$ can be removed, and the clad propagation light can be more reliably removed.

In Fig. 14, the cutout 12a is formed to surround the periphery of the optical axis of the optical path 4, but the optical transmission module 1 of the sixth variant Is not limited to such configuration, and the cutout 12a may be formed at one part of the surface area surrounding the periphery of the optical axis of the optical path 4.

(Applications)

The optical path 4 of the present embodiment can be applied to the following applications.

First, as a first application, use can be made to a hinge portion of a foldable electronic device such as a foldable mobile telephone, a foldable PHS (Personal Handyphone System), a foldable PDA (Personal Digital Assistant), or a foldable notebook computer.

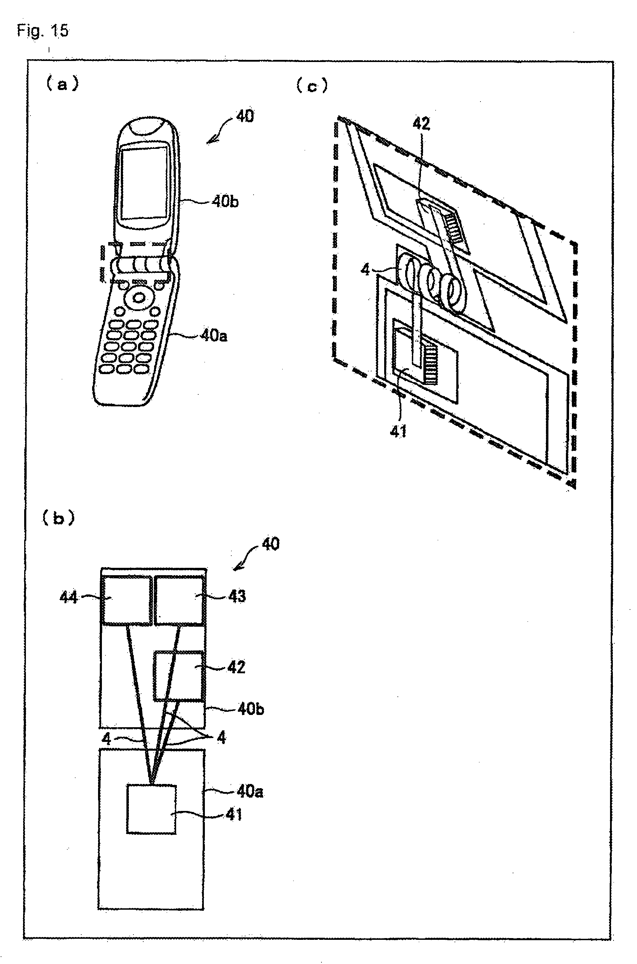

Fig. 15 shows an example where the optical path 4 is applied to a foldable mobile telephone 40. That is, (a) of Fig. 15 is a perspective view showing an outer appearance of the foldable mobile telephone 40 incorporating the optical path 4.

(b) of Fig. 15 is a block diagram of a portion applied with the optical path 4 in the foldable mobile telephone 40 shown in (a) of Fig. 15. As shown in the figure, a control unit 41 arranged on a body 40a side of the foldable mobile telephone 40, and an external memory 42, a camera (digital camera) 43, a display unit (liquid crystal display) 44 arranged on a lid (drive unit) 40b side rotatably arranged at one end of the body with a hinge portion as the shaft are respectively connected to the optical path 4.

(c) of Fig. 15 is a perspective plan view of the hinge portion in (a) of Fig. 15 (portion surrounded by broken line). As shown in the figure, the optical path 4 connects the control unit arranged on the body side, and the external memory 42, the camera 43, and the display unit 44 arranged on the lid side by being wrapped around a support rod at the hinge portion to be bent.

High speed, large capacity communication can be realized in a limited space by applying the optical path 4 to such foldable electronic device. Therefore, the optical path is particularly suitable in devices where high speed and large capacity data communication is necessary and miniaturization is desired such as a foldable liquid crystal display device.

As a second application, the optical path 4 can be applied to a device including a drive unit such as a printer head in a printing device (electronic device) or a reader in a hard disc recording and reproducing device.

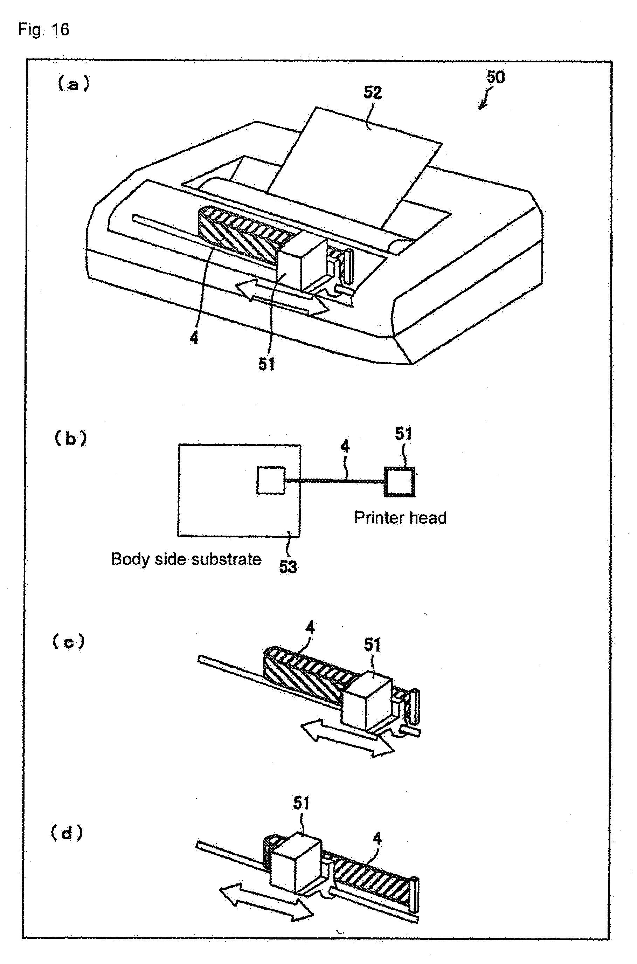

Fig. 16 shows an example where the optical path 4 is applied to a printing device 50. (a) of Fig. 16 is a perspective view showing an outer appearance of the printing device 50. As shown in the figure, the printing device 50 includes a printer head 51 which performs printing on a paper 52 while moving in a width direction of the paper 52, where one end of the optical path 4 is connected to the printer head 51.

(b) of Fig. 16 is a block diagram of the portion applied with the optical path 4 in the printing device 50. As shown in the figure, one end of the optical path 4 is connected to the printer head 51, and the other end is connected to a body side substrate in the printing device 50. A control means for controlling the operation of each unit of the printing device 50, and the like are arranged on the body side substrate.

(c) and (d) of Fig. 16 are perspective views showing a curved state of the optical path 4 when the printer head 51 is moved (driven) in the printing device 50. As shown in the figure, when the optical path 4 is applied to the drive unit such as the printer head 51, the curved state of the optical path 4 changes by the drive of the printer head 51, and each position of the optical path 4 is repeatedly curved.

Therefore, the optical path 4 according to the present embodiment is suitable for such drive unit. The high speed and large capacity communication using the drive unit can be realized by applying the optical path 4 to the drive unit.

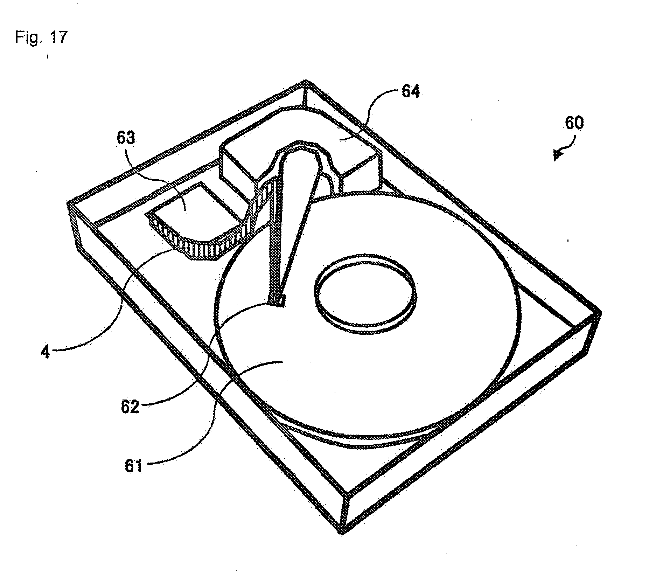

Fig. 17 shows an example where the optical path 4 is applied to a hard disc recording and reproducing device 60.

As shown in the figure, the hard disc recording and reproducing device 60 includes a disc (hard disc) 61, a head (read, write head) 62, a substrate introducing unit 63, a drive unit (drive motor) 64, and the optical path 4.

The drive unit 64 drives the head 62 along the radius direction of the disc 61. The head 62 reads the information recorded on the disc 61, or writes information on the disc 61. The head 62 is connected to the substrate introducing unit 63 by way of the optical path 4 to thereby propagate information read from the disc 61 to the substrate introducing unit 63 as an optical signal, and receive an optical signal of the information to write on the disc 61 propagated from the substrate introducing unit 63.

Therefore, high speed and large capacity communication can be realized by applying the optical path 4 to the drive unit such as the head 62 in the hard disc recording and reproducing device 60.

The present invention is not limited to the above-described embodiments, and various modifications may be made within the scope of the Claims. In other words, embodiments obtained by combining technical means appropriately changed in the scope of the Claims are also encompassed in the technical scope of the present invention.

INDUSTRIAL APPLICABILITY

The optical transmission module according to the present invention is applicable to an optical communication path between various types of devices, and is also applicable to a flexible optical wiring serving as an in-device wiring mounted on small and thin consumer use devices.

**Claims**

**1.** An optical transmission module (1), comprising a light-emitting element (6), a light-receiving element (8), and an optical path (4) for optically coupling the light-emitting element (6) and the light-receiving element (8), and transmitting an optical signal; wherein

the optical path (4) includes a core part (11), a clad part (12) surrounding the core part (11), and a support board (9) for supporting the optical path (4) itself and the light-receiving element (8);

wherein a resin part (13A) formed of resin having a refractive index higher than air is arranged only outside the optical path (4) at a part of a surface area of the clad part (12) along an optical transmission direction to which optical signals are transmitted;

wherein the resin part (13A) has an inclined surface ($13A_1$) in which the surface on the side opposite of the clad part (12) Is tilted relative to the optical transmission direction; and

wherein the inclined surface ($13A_1$) in the resin part ($13A_1$) forms an acute angle with the surface of the clad part (12) at the opposite of the light-receiving element (8) side, the resin part (13A) being adapted to guide clad propagation light which propagates through the clad part (12) such that the clad propagation light enters the resin part (13A) to escape to the outside of the clad part (12).

**2.** The optical transmission module (1) according to claim 1, wherein
the resin part (13A) is arranged on one surface area of the surface areas of two clad parts (12) facing each other in a direction perpendicular to the optical transmission direction; and
wherein, with respect to the clad propagation light propagating at a propagation angle $\theta$ on the side surface along the optical transmission direction of the clad part (12), a length L in the optical transmission direction of the resin part (13A) is set in a range satisfying the following equation:

$$\frac{2T}{\tan\theta_{max}} < L < \frac{2T}{\tan\theta_{min}}$$

where the propagation angle of the clad propagation light corresponding to a tolerable delay time for tolerating signal delay is a tolerable propagation angle $\theta_{min}$, a critical angle at which the clad propagation light leaks to the outside of the clad part (12) is a critical propagation angle $\theta_{max}$, and a length in a direction perpendicular to the optical transmission direction of the optical path (4) is a thickness T.

**3.** The optical transmission module (1) according to claim 1, wherein
the resin part (13A) is arranged on both surface areas of the surface areas of the two clad parts (12) facing each other in a direction perpendicular to the optical transmission direction; and
wherein, with respect to the clad propagation light propagating at a propagation angle $\theta$ on the side surface along the optical transmission direction of the clad part (12), a length L in the optical transmission direction of the resin part (13A) is set in a range satisfying the following equation:

$$\frac{T}{\tan\theta_{max}} < L < \frac{T}{\tan\theta_{min}}$$

where the propagation angle of the clad propagation light corresponding to a tolerable delay time for tolerating the signal delay is a tolerable propagation angle $\theta_{min}$, a critical angle at which the clad propagation light leaks to the outside of the clad part (12) is a critical propagation angle $\theta_{max}$, and a length in a direction perpendicular to the optical transmission direction of the optical path (4) is a thickness T.

**4.** The optical transmission module (1) according to claim 1, wherein the resin part (13A) is arranged near an end on the light-receiving element side in the optical path (4).

**5.** The optical transmission module (1) according to claim 1, wherein
a distance F is set in a range satisfying the following equation:

$$F \le \frac{c \times \cos\theta_{max} \times T_d}{1 - \cos\theta_{max}}$$

where the distance from an end of a supporting surface (9a) for supporting the optical path (4) at the support board (9) to the resin part (13A) is the distance F, a delay time for tolerating the signal delay is a tolerable delay time $T_d$, a velocity of light is c, and a critical angle at which the clad propagation light leaks to the outside of the clad part (12) is a critical propagation angle $\theta_{max}$.

**6.** The optical transmission module (1) according to claim 1, wherein a light absorbing part (13B) for absorbing the clad propagation light entered to the resin part (13A) is arranged adjacent on the light-receiving element side of the resin part (13A).

7. The optical transmission module (1) according to claim 1, wherein the resin part (13A) is formed to surround an optical axis of the optical path (4).

8. The optical transmission module (1) according to claim 1, wherein
the resin part (13A) is formed on a supporting surface (9a) for supporting the optical path (4) at the support board (9); and
wherein the support board (9) is made of a light absorbing material capable of absorbing the clad propagation light.

9. The optical transmission module (1) according to claim 1, wherein
the supporting surface (9a) is an uneven surface having a recessed part and a projecting part; and
wherein the resin part (13A) is formed to fill the recessed part.

10. The optical transmission module (1) according to claim 1, wherein the resin part (13A) is arranged near the end on the light-emitting element side in the optical path (4).

11. The optical transmission module (1) according to claim 1, wherein the resin part (13A) is made of a material having a refractive index higher than a refractive index of the clad part (12).

12. The optical transmission module (1) according to claim 1, wherein the resin part (13A) is made of a material having a high attenuation rate with respect to the clad propagation light.

13. An electronic device comprising the optical transmission module (1) according to any one of claims 1 to 12.

**Patentansprüche**

1. Optisches Übertragungsmodul (1), aufweisend ein Lichtemissionselement (6), ein Lichtempfangselement (8) und einen Strahlengang (4) zur optischen Kopplung des Lichtemissionselements (6) und des Lichtempfangselements (8) und zur Übertragung eines optischen Signals;
wobei der Strahlengang (4) einen Kernteil (11), einen den Kernteil (11) umgebenden Mantelteil (12) und eine Stützplatte (9) zur Stützung des Strahlengangs (4) selbst und des Lichtempfangselements (8) aufweist;
wobei ein Harzteil (13A), das aus einem Harz mit einem Brechungsindex, der größer als der von Luft ist, ausgebildet ist, außerhalb des Strahlengangs (4) lediglich an einem Teil von einem Oberflächenbereich des Mantelteils (12) entlang einer optischen Übertragungsrichtung, in welcher optische Signale übertragen werden, angeordnet ist;
wobei der Harzteil (3A) eine geneigte Fläche ($13A_1$) hat, bei welcher die Fläche an der gegenüberliegenden Seite des Mantelteils (12) in Bezug auf die optische Übertragungsrichtung geneigt ist; und
wobei die geneigte Fläche ($13A_1$) in dem Harzteil (13A) einen spitzen Winkel mit der Fläche des Mantelteils (12) an der gegenüberliegenden Seite des Lichtempfangselements (8) ausbildet, wobei der Harzteil (13A) eingerichtet ist, sich durch den Mantelteil (12) ausbreitendes Mantelausbreitungslicht so zu leiten, dass das Mantelausbreitungslicht in den Harzteil (13A) eintritt, um nach außen in Bezug auf den Mantelteil (12) auszutreten.

2. Optisches Übertragungsmodul (1) gemäß Anspruch 1, wobei der Harzteil (13A) an einem Oberflächenbereich von den Oberflächenbereichen von zwei Mantelteilen (12) angeordnet ist, die einander in einer Richtung zugewandt sind, die senkrecht zu der optischen Übertragungsrichtung steht; und
wobei, in Bezug auf das Mantelausbreitungslicht, das sich mit einem Ausbreitungswinkel θ an der Seitenfläche entlang der optischen Übertragungsrichtung des Mantelteils (12) ausbreitet, eine Länge L in der optischen Übertragungsrichtung des Harzteils (13A) in einem Bereich festgelegt ist, der die folgende Gleichung erfüllt:

$$\frac{2T}{\tan\theta_{max}} < L < \frac{2T}{\tan\theta_{min}}$$

wobei der Ausbreitungswinkel des Mantelausbreitungslichts entsprechend einer tolerierbaren Verzögerungszeit für das Tolerieren einer Signalverzögerung ein tolerierbarer Ausbreitungswinkel $\theta_{min}$ ist, ein kritischer Winkel, bei welchem das Mantelausbreitungslicht nach außen in Bezug auf den Mantelsteil (12) austritt, ein kritischer Ausbreitungswinkel $\theta_{max}$ ist, und eine Länge in einer Richtung, die senkrecht auf der optischen Übertragungsrichtung des Strahlengangs (4) steht, eine Dicke T ist.

3. Optisches Übertragungsmodul (1) gemäß Anspruch 1, wobei der Harzteil (13A) an beiden Oberflächenbereichen der Oberflächenbereiche von den zwei Mantelteilen (12) angeordnet ist, die einander in einer Richtung zugewandt sind, die senkrecht auf der optischen Übertragungsrichtung steht; und

wobei, in Bezug auf das Mantelausbreitungslicht, das sich bei einem Ausbreitungswinkel $\theta$ an der Seitenfläche entlang der optischen Übertragungsrichtung des Mantelteils (12) ausbreitet, eine Länge L in der optischen Übertragungsrichtung des Harzteils (13A) in einem Bereich festgelegt ist, der die folgende Gleichung erfüllt:

$$\frac{T}{\tan \theta_{max}} < L < \frac{T}{\tan \theta_{min}}$$

wobei der Ausbreitungswinkel des Mantelausbreitungslichts entsprechend einer tolerierbaren Verzögerungszeit für das Tolerieren der Signalverzögerung ein tolerierbarer Ausbreitungswinkel $\theta_{min}$ ist, ein kritischer Winkel, bei welchem das Mantelausbreitungslicht nach außen in Bezug auf den Mantelteil (12) austritt, ein kritischer Ausbreitungswinkel $\theta_{max}$ ist, und eine Länge in einer Richtung, die senkrecht auf der optischen Übertragungsrichtung des Strahlengangs (4) steht, eine Dicke T ist.

4. Optisches Übertragungsmodul (1) gemäß Anspruch 1, wobei der Harzteil (13A) nahe an einem Ende an der Lichtempfangselementseite in dem Strahlengang (4) angeordnet ist.

5. Optisches Übertragungsmodul (1) gemäß Anspruch 1, wobei eine Strecke F in einem Bereich festgelegt ist, der die folgende Gleichung erfüllt:

$$F \leq \frac{c \times \cos \theta_{max} \times T_d}{1 - \cos \theta_{max}}$$

wobei die Strecke von einem Ende von einer Stützfläche (9A) zur Stützung des Strahlengangs (4) bei der Stützplatte (9) zu dem Harzteil (13A) die Strecke F ist, eine Verzögerungszeit für das Tolerieren der Signalverzögerung eine tolerierbare Verzögerungszeit $T_d$ ist, eine Lichtgeschwindigkeit c ist, und ein kritischer Winkel, bei welchem das Mantelausbreitungslicht nach außen in Bezug auf den Mantelteil (12) austritt, ein kritischer Ausbreitungswinkel $\theta_{max}$ ist.

6. Optisches Übertragungsmodul (1) gemäß Anspruch 1, wobei ein Lichtabsorptionsteil (13B) zum Absorbieren des Mantelausbreitungslichts, das in den Harzteil (13A) eingetreten ist, angrenzend an der Lichtempfangselementseite des Harzteils (13A) angeordnet ist.

7. Optisches Übertragungsmodul (1) gemäß Anspruch 1, wobei der Harzteil (13A) derart ausgebildet ist, dass es eine optische Achse des Strahlengangs (4) umgibt.

8. Optisches Übertragungsmodul (1) gemäß Anspruch 1, wobei der Harzteil (13A) an einer Stützfläche (9A) zur Stützung des Strahlengangs (4) an der Stützplatte (9) ausgebildet; und

wobei die Stützplatte (9) aus einem lichtabsorbierenden Material ausgebildet ist, das dazu imstande ist, das Mantelausbreitungslicht zu absorbieren.

9. Optisches Übertragungsmodul (1) gemäß Anspruch 1, wobei die Stützfläche (9A) eine unebene Fläche mit einem Aussparungsteil und einem Vorsprungsteil ist; und

wobei der Harzteil (13A) so ausgebildet ist, dass es den Aussparungsteil ausfüllt.

10. Optisches Übertragungsmodul (1) gemäß Anspruch 1, wobei der Harzteil (13A) nahe an dem Ende an der Lichtemissionselementseite in dem Strahlengang (4) angeordnet ist.

11. Optisches Übertragungsmodul (1) gemäß Anspruch 1, wobei der Harzteil (13A) aus einem Material ausgebildet ist, das einen Brechungsindex hat, der größer als ein Brechungsindex von dem Mantelteil (12) ist.

12. Optisches Übertragungsmodul (1) gemäß Anspruch 1, wobei der Harzteil (13A) aus einem Material ausgebildet ist, das eine hohe Schwächungsrate in Bezug auf das Mantelausbreitungslicht hat.

**13.** Elektronische Vorrichtung, aufweisend das optische Übertragungsmodul (1) gemäß einem der Ansprüche 1 bis 12.

## Revendications

**1.** Module de transmission optique (1), qui comprend un élément d'émission de lumière (6), un élément de réception de lumière (8), et un trajet optique (4) destiné à coupler optiquement l'élément d'émission de lumière (6) et l'élément de réception de lumière (8), et à transmettre un signal optique ; dans lequel
le trajet optique (4) comprend une partie de noyau (11), une partie de revêtement (12) qui entoure la partie de noyau (11), et un panneau de support (9) destiné à supporter le trajet optique (4) lui-même et l'élément de réception de la lumière (8) ;
dans lequel une partie en résine (13A) formée d'une résine ayant un indice de réfraction supérieur à l'air est disposée uniquement à l'extérieur du trajet optique (4), au niveau d'une partie d'une surface de la partie de revêtement (12) le long d'une direction de transmission optique dans laquelle les signaux optiques sont transmis ;
dans lequel la partie en résine (13A) possède une surface inclinée ($13A_1$) sur laquelle la surface située sur le côté opposé de la partie de revêtement (12) est inclinée par rapport à la direction de transmission optique ; et
dans lequel la surface inclinée ($13A_1$) dans la partie en résine (13A) forme un angle aigu avec la surface de la partie de revêtement (12) au niveau du côté opposé de l'élément de réception de lumière (8), la partie en résine (13A) étant adaptée pour guider la lumière de propagation du revêtement qui se propage dans la partie de revêtement (12) afin que la lumière de propagation du revêtement pénètre dans la partie en résine (13A) afin de s'échapper vers l'extérieur de la partie en résine (12).

**2.** Module de transmission optique (1) selon la revendication 1, dans lequel
la partie en résine (13A) est disposée sur une surface des surfaces de deux parties de revêtement (12) qui se font face dans une direction perpendiculaire à la direction de transmission optique ; et
dans lequel, par rapport à la lumière de propagation du revêtement qui se propage à un angle de propagation $\theta$ sur la surface latérale le long de la direction de transmission optique de la partie de revêtement (12), une longueur L dans la direction de transmission optique de la partie en résine (13A) est définie de sorte à satisfaire l'équation suivante :

$$\frac{2T}{\tan\theta_{max}} < L < \frac{2T}{\tan\theta_{min}}$$

où l'angle de propagation de la lumière de propagation du revêtement qui correspond à un retard tolérable du signal est un angle de propagation tolérable $\theta_{min}$, un angle critique selon lequel la lumière de propagation du revêtement s'échappe vers l'extérieur de la partie de revêtement (12) est un angle de propagation critique $\theta_{max}$, et une longueur dans une direction perpendiculaire à la direction de transmission optique du trajet optique (4) est une épaisseur T.

**3.** Module de transmission optique (1) selon la revendication 1, dans lequel
la partie en résine (13A) est disposée sur les surfaces des deux parties de revêtement (12) qui se font face dans une direction perpendiculaire à la direction de transmission optique ; et
dans lequel, par rapport à la lumière de propagation du revêtement qui se propage à un angle de propagation $\theta$ sur la surface latérale le long de la direction de transmission optique de la partie de revêtement (12), une longueur L dans la direction de transmission optique de la partie en résine (13A) est définie de sorte à satisfaire l'équation suivante :

$$\frac{T}{\tan\theta_{max}} < L < \frac{T}{\tan\theta_{min}}$$

où l'angle de propagation de la lumière de propagation du revêtement qui correspond à un retard tolérable pour le signal est un angle de propagation tolérable $\theta_{min}$, un angle critique selon lequel la lumière de propagation du revêtement s'échappe vers l'extérieur de la partie de revêtement (12) est un angle de propagation critique $\theta_{max}$, et une longueur dans une direction perpendiculaire à la direction de transmission optique du trajet optique (4) est une épaisseur T.

**4.** Module de transmission optique (1) selon la revendication 1, dans lequel la partie en résine (13A) est disposée près d'une extrémité du côté de l'élément de réception de lumière au sein du trajet optique (4).

**5.** Module de transmission optique (1) selon la revendication 1, dans lequel une distance F est définie de sorte à satisfaire l'équation suivante :

$$F \leq \frac{c \times \cos\theta_{max} \times T_d}{1 - \cos\theta_{max}}$$

où la distance entre une extrémité d'une surface de support (9a) destinée à supporter le trajet optique (4) au niveau du panneau de support (9) et la partie en résine (13A) correspond à la distance F, un retard tolérable pour le signal est un retard tolérable $T_d$, une vitesse de la lumière est c, et un angle critique selon lequel la lumière de propagation du revêtement s'échappe vers l'extérieur de la partie de revêtement (12) est un angle de propagation critique $\theta_{max}$.

**6.** Module de transmission optique (1) selon la revendication 1, dans lequel une partie d'absorption de la lumière (13B) destinée à absorber la lumière de propagation du revêtement qui a pénétré dans la partie en résine (13A) est disposée de manière adjacente du côté de l'élément de réception de lumière de la partie en résine (13A).

**7.** Module de transmission optique (1) selon la revendication 1, dans lequel la partie en résine (13A) est formée afin d'entourer un axe optique du trajet optique (4).

**8.** Module de transmission optique (1) selon la revendication 1, dans lequel la partie en résine (13A) est formée sur une surface de support (9a) destinée à supporter le trajet optique (4) au niveau du panneau de support (9) ; et dans lequel le panneau de support (9) est composé d'un matériau d'absorption de la lumière capable d'absorber la lumière de propagation du revêtement.

**9.** Module de transmission optique (1) selon la revendication 1, dans lequel la surface de support (9a) est une surface irrégulière qui possède une partie en renfoncement et une partie en saillie ; et dans lequel la partie en résine (13A) est formée afin de remplir la partie de renfoncement.

**10.** Module de transmission optique (1) selon la revendication 1, dans lequel la partie en résine (13A) est disposée près de l'extrémité du côté de l'élément de réception de lumière au sein du trajet optique (4).

**11.** Module de transmission optique (1) selon la revendication 1, dans lequel la partie en résine (13A) est composée d'un matériau qui possède un indice de réfraction supérieur à celui de la partie de revêtement (12).

**12.** Module de transmission optique (1) selon la revendication 1, dans lequel la partie en résine (13A) est composée d'un matériau qui possède un taux d'atténuation élevé par rapport à la lumière de propagation du revêtement.

**13.** Dispositif électronique, qui comprend le module de transmission optique (1) selon l'une quelconque des revendications 1 à 12.

Fig. 1

```
-------- Clad propagation light
———— Signal light
```

Fig. 2

Fig. 3

Fig. 4

Propagation angle vs delay time

Fig. 5

Fig. 6(a)

Fig. 6(b)

13B — 13A

Fig. 6(c)

12

13B — 13A

Fig. 7

4

4C

8

9

F

13B    13A

— — — — — — Leak light propagation path

Fig. 8

8

9

13B   13A₁   13A

13

————— Leak light propagation path

Fig. 9

—————— Leak light propagation path

Fig. 10

(a)

4

13A

9

———— Leak light propagation path

(b)

4

13A

9

————— Leak light propagation path

(c)

4

13A

9

————— Leak light propagation path

26

Fig. 11

(a)

9a    4

13A  13A₁

9

————— Leak light propagation path

(b)

9a    4

13A₁
13A

9

————— Leak light propagation path

(c)

9a    4

13A₁
13A

9

————— Leak light propagation path

Fig. 12

(a)

9a

4

13A

9

──── ──── Leak light propagation path

(b)

9a

4

13A

9

──── ──── Leak light propagation path

Fig. 13

9a   9b   4

13A

9

──── ──── Leak light

9c

Fig. 14

———— Leak light propagation path

Fig. 15

( a )

40

40b

40a

( c )

42

4

41

( b )

40

44

43

42

40b

4 — 4

40a

41

Fig. 16

(a)

(b)

Printer head

Body side substrate

(c)

(d)

Fig. 17

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20040036955 A1

- JP 11264912 A